# EUROPÄISCHE PATENTSCHRIFT

(11) **EP 3 092 164 B1**
(45) Veröffentlichungstag und Bekanntmachung des Hinweises auf die Patenterteilung: **18.10.2017**
(21) Anmeldenummer: 15700173.6
(22) Anmeldetag: 08.01.2015
(51) Int. Cl.: B62D 1/19

(54) **CRASHSYSTEM AUS FASERVERBUNDWERKSTOFF ZUR ENERGIEAUFNAHME**
CRASH SYSTEM MADE OF A COMPOSITE FIBER MATERIAL FOR ABSORBING ENERGY
SYSTÈME DE SÉCURITÉ EN MATIÈRE COMPOSITE RENFORCÉE PAR DES FIBRES SERVANT À ABSORBER L'ÉNERGIE EN CAS DE COLLISION

(30) Priorität: 09.01.2014 DE 102014000069
(43) Veröffentlichungstag der Anmeldung: 16.11.2016
(73) Patentinhaber: ThyssenKrupp Presta AG, 9492 Eschen (LI); thyssenkrupp AG, 45143 Essen (DE)
(72) Erfinder: HEITZ, Thomas, 9493 Mauren (LI); REGNER, Sebastian, 88131 Lindau (DE); SCHACHT, Arne, 6800 Feldkirch (AT); KREUTZ, Daniel, 6800 Feldkirch (AT)
(74) Vertreter: thyssenkrupp Intellectual Property GmbH
(86) Internationale Anmeldenummer: PCT/EP2015/000016
(87) Internationale Veröffentlichungsnummer: WO 2015/104214

(56) Entgegenhaltungen:
- DE-B3-102012 005 434
- JP-A- 2005 007 947

## Beschreibung

Die vorliegende Erfindung betrifft eine Lenksäule für ein Fahrzeug.

Gattungsgemäße Lenksäulenanordnungen oder Lenksäulen sind im Einsatzfall in ein Kraftfahrzeug eingebaut und übertragen die vom Fahrer auf ein Lenkrad aufgebrachten Drehmomente in ein Lenksystem des Fahrzeuges. Weiterhin müssen Lenksäulen im Einsatzfall vielfältige Belastungen aushalten, insbesondere beim Aufprall des Fahrzeuges auf ein Hindernis - dem Crashfall.

Im Falle eines Zusammenstoßes eines Fahrzeugs gegen beispielsweise ein anderes Fahrzeug oder ein Hindernis kann der Körper eines Fahrzeugführers auf das Lenkrad aufprallen.

Um den Stoß, der auf den Körper des Fahrers einwirkt, zu entlasten bzw. zu mindern und um eine wesentliche Verletzung des Fahrzeugführers durch die Lenksäule zu verhindern, sind aus dem Stand der Technik verschiedene Stoß absorbierende Lenksäulen bekannt.

So wird in der DE 10 2010 036 894 A1 ein Energieabsorptionsmechanismus offenbart, in dem sich ein Biegedraht im Crashfall verformt, wobei der Biegedraht auch einen Bereich aufweisen kann, bei dem der Streifen aus einem Grundblech herausgerissen wird.

Weiterhin sind im Stand der Technik Lösungen zum Beispiel aus DE 101 41 078 C1 bekannt, bei denen mittels eines Werkzeuges aus der Oberfläche eines Energieabsorptionselements Werkstoff herausgeschält wird.

In der JP 2005 007947 A ist eine Lenksäule nach dem Oberbegriff des Anspruchs 1 mit einem Energieabsorptionselement in Form eines Stegs beschrieben, der bei einer durch die axiale Stoßbewegung im Crashfall hervorgerufenen Bewegung des Mantelrohrs durch das Zusammenwirken mit einem Aufprallelement zumindest teilweise zerstört wird.

Den technischen Lösungen der bekannten Energieabsorptionsmechanismen ist gemein, dass sie in der Regel sehr aufwendig sind und aus vielen Einzelteilen bestehen. Des Weiteren basieren die bekannten Energieabsorptionsmechanismen fast ausschließlich auf Metallkonstruktionen, bei denen der Leichtbaugedanke nicht umsetzbar ist.

Aufgabe der Erfindung ist es, eine Lenksäule für ein Fahrzeug bereitzustellen, die besonders einfach aufgebaut ist, leicht ist und im Crashfall effektiv als Energieabsorptionselement wirkt. Gelöst wird die Aufgabe durch eine Lenksäule entsprechend dem Merkmal des Anspruchs 1. In den Unteransprüchen sind vorteilhafte Weiterbildungen der Erfindung dargestellt.

Weil bei einer Lenksäule für ein Kraftfahrzeug mit einer Lenkspindel, die um ihre Drehachse drehbar in einem Mantelrohr gelagert ist, wobei das Mantelrohr in einer Führungsklammer entlang der Längsachse der Lenkspindel verschiebbar geführt ist, wobei das Mantelrohr bei einer axialen Stoßeinwirkung unter Energieaufnahme verschiebbar ist und dabei mit zumindest einem Energieabsorptionselement zusammen wirkt, und wobei das zumindest eine Energieabsorptionselement ein aus einem Kunststoff und/oder Faserverbundwerkstoff hergestellter Steg ist, welcher bei einer durch die axiale Stoßeinwirkung hervorgerufene Bewegung des Mantelrohrs durch ein Aufprallelement zumindest teilweise zerstört wird, kann mit dieser einfachen Konstruktion im Crashfall effektiv die Energie eines Stoßes auf die Lenksäule absorbiert werden.

Die Zerstörung des Energieabsorptionselements erfolgt dabei in Form eines Aufbrechens des Elements in eine Vielzahl von kleinen Partikeln, wobei jedoch keine Späne abgehoben werden. Die Partikel werden bei der Zerstörung des Energieabsorptionselements aus dem Energieabsorptionselement herausgelöst oder geschleudert. Die Partikelgröße ist dabei bevorzugt kleiner als 5mm im Hüllkreis.

Im bevorzugten Fall weist die Lenksäule einen Fixiermechanismus auf, der einen Spannapparat mit einem Spannbolzen umfasst. Im weiter bevorzugten Fall ist der Steg auf dem Mantelrohr gebildet und das Aufprallelement ist karosseriefest angeordnet. Im einfachsten Fall kann dabei der Spannbolzen als karosseriefestes Aufprallelement dienen. Je nach Anforderungen an den Energieabsorptionsmechanismus können ein Steg oder mehrere hintereinander oder nebeneinander liegende Stege vorgesehen sein. Weiterhin kann die Form des Stegs beliebig an die Anforderungen angepasst werden. Der Querschnitt kann dabei über die Länge konstant sein, oder sich stufenartig bzw. linear ändern.

Weil vorgesehen ist, dass der Steg aus Kunststoff, insbesondere Faserverbundwerkstoff hergestellt ist, ergeben sich weitere Vorteile. Aufgrund der niedrigen Dichte trägt diese Materialwahl zur Gewichtseinsparung bei. Zudem kann durch den Einsatz von Faserverbundwerkstoff gegenüber Metall bei gleichem Volumen mehr Energie im Crashfall absorbiert werden. Weiter hat sich in Versuchen herausgestellt, dass ein Faserverbundwerkstoff ein besonderes Crashverhalten zeigt, das nützlich für die Darstellung bestimmter Energieabsorptionsverläufe ist.

Weiterhin kann der Steg an einer äußeren Umfangsfläche des Mantelrohrs einstückig angeformt sein. Im Fertigungsprozess wird somit das Mantelrohr inklusive des Energieabsorptionselements hergestellt, wodurch der Aufbau weiterhin vereinfacht wird.

In einer vorteilhaften Ausführungsform wird das Mantelrohr mit Steg mittels Pultrusion hergestellt. Pultrusion hat den Vorteil, dass ein hohes Maß an Automatisierbarkeit gegeben ist und gezielt mit hoher Präzision Bauteile aus Faserverbundwerkstoff gefertigt werden können.

In einer weiteren Ausführungsform ist vorgesehen, den Steg als separates Bauteil auszubilden. Der Steg kann dann mit dem Mantelrohr fest verbunden werden. Der Steg ist dabei vorteilhaft aus Kunststoff, insbesondere Faserverbundwerkstoff und weist die vorteilhaften Eigenschaften auf. Das Mantelrohr bzw. die komplette Lenksäule kann dabei aus einem beliebigen Werkstoff zum Beispiel Metall hergestellt sein.

Alternativ kann der separat ausgebildete Steg auch an der Führungsklammer oder einer anderen in Verschieberichtung des Mantelrohres gesehen karosseriefesten Einrichtung befestigt sein. In diesem Fall ist am Mantelrohr ein Aufprallelement vorgesehen, dass bei einer Verschiebung des Mantelrohrs im Crashfall mit dem Steg zusammenwirkt.

Für den Steg aus Faserverbundwerkstoff ist es vorteilhaft, wenn die Fasern im Steg in Längsrichtung des Mantelrohrs ausgerichtet sind. Durch diese faserparallele Anordnung tritt in Längsrichtung des Mantelrohrs eine Verstärkungswirkung ein. Die Ausbildung von Fasern, alternativ oder in Kombination, die quer zur Längsrichtung ausgerichtet sind, besitzt weitere Vorteile. Eine regellose Faserstruktur innerhalb des Steges kann zusätzlich vorteilhafte Eigenschaften für den vorgesehenen Crashfall bedingen.

Bevorzugt werden in Abhängigkeit von dem gewünschten Energieabsorptionsniveau des Energieabsorptionselements Kohlenstoff-, Glas-, Aramid-, Basalt- oder auch Naturfasern einzeln oder in Kombination miteinander im Faserverbundwerkstoff verwendet.

In einer bevorzugten Ausführungsform ist der Spannbolzen am Fahrzeug karosseriefest montiert ist und dient mittelbar oder unmittelbar als karosseriefestes Aufprallelement.

Im Folgenden werden Ausführungsbeispiele der Erfindung anhand von Zeichnungen veranschaulicht. Gleiche oder funktionsgleiche Bauteile tragen gleiche Bezugsziffern. Es zeigen:
- Figur 1:: eine Ansicht einer erfindungsgemäßen Lenksäule,
- Figur 2:: einen Längsschnitt eines Mantelrohrs während eines Bearbeitungsschritts,
- Figur 3:: einen Längsschnitt eines Mantelrohrs,
- Figur 4:: eine räumliche Darstellung des Mantelrohrs aus Fig. 3,
- Figur 5:: einen Längsschnitt eines Mantelrohrs mit Spannbolzen,
- Figur 6:: einen Längsschnitt eines Mantelrohrs mit Spannbolzen während des Crashfalls,
- Figur 7:: eine Ansicht einer erfindungsgemäßen Lenksäule mit separat ausgebildetem Energieabsorptionselement,
- Figur 8:: eine Ansicht einer alternativen Ausführungsform des Stegs,
- Figur 9, 10, 11: eine Darstellung der erfindungsgemäßen Lenksäule analog zu den Figuren 5, 6 und 8 in einer weiteren Ausführungsform, sowie
- Figur 12: eine räumliche Darstellung einer alternativen Ausführungsform des Mantelrohrs analog zu Figur 4.

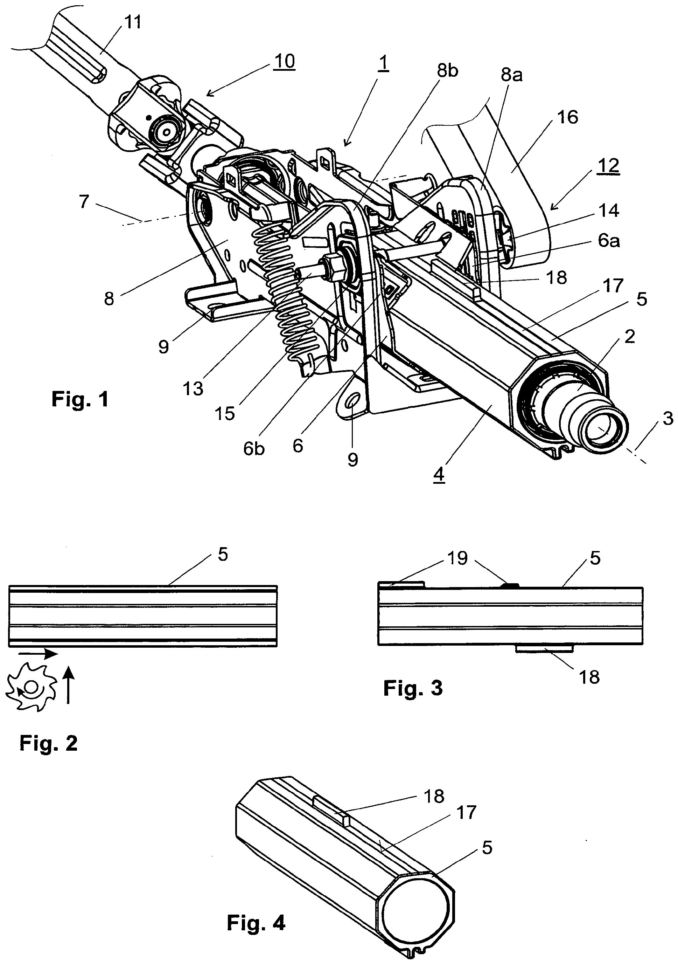

In der Figur 1 ist eine erfindungsgemäße Lenksäule 1 veranschaulicht, die eine Lenkspindel 2 umfasst, die um ihre Drehachse 3 drehbar in einer Lenkspindellagereinheit 4 gelagert ist. Die Lenkspindellagereinheit 4 weist in an sich bekannter Weise ein Mantelrohr 5 auf. Das Mantelrohr 5 ist in einer Führungsklammer 6 entlang der Längsachse 3 der Lenkspindel 2 verschiebbar geführt. Die Führungsklammer 6 ist um eine Schwenkachse 7 in einem Halteteil 8 schwenkbar gelagert. Das Halteteil 8 kann in Befestigungspunkten 9 an der nicht dargestellten Karosserie befestigt werden.

Eine von einem Fahrer über ein (nicht dargestelltes) Lenkrad in die Lenkspindel 2 eingebrachte Drehbewegung wird über ein Kardangelenk 10 und weitere Lenkwellenteile 11 in das nicht dargestellte Lenkgetriebe eingebracht. Zur Erhöhung des Komforts des Fahrers kann die Lenksäule 1 in ihrer Höhe und in ihrer Länge verstellt werden. Hierzu ist ein Fixiermechanismus 12 vorgesehen, der einen im Stand der Technik bekannten Spannapparat umfasst. Der karosseriefeste Spannapparat weist einen Spannbolzen 13, einen Nockenmechanismus 14, ein Gegendrucklager 15 und einen Spannhebel 16 auf. Durch Verschwenkung des Spannhebels 16 werden die beiden Nocken des Nockenmechanismus 14 gegeneinander verdreht und die Seitenwangen 8a, 8b zusammengezogen, wodurch eine reibschlüssige Verspannung der Seitenwangen 8a, 8b des Halteteils 8 mit den Seitenflächen der Führungsklammer 6 und wiederum mit Seitenflächen des Mantelrohrs 5 erfolgt.

Der Spannbolzen 13 durchsetzt Langlöcher in den Seitenwangen 8a, 8b des Halteteils 8 und Löcher in den Seitenflächen 6a, 6b der Führungsklammer 6. Der Nockenmechanismus 14 ist auf dem einen Ende des Spannbolzens und das Drucklager 15 auf dem anderen Ende des Spannbolzens 13 angeordnet. Die Seitenwangen 8a, 8b, sowie die Seitenflächen 6a, 6b, als auch das Mantelrohr 5 sind wiederum zwischen dem Nockenmechanismus 14 und dem Drucklager 15 angeordnet.

Durch Schwenken des Spannhebels 16 kann das Fixiersystem 12 wahlweise in eine geöffnete Stellung oder eine geschlossene Stellung umgeschaltet werden. In der geöffneten Stellung kann die Lenkspindel 2, beziehungsweise das daran befestigte Lenkrad (nicht dargestellt in der Figur) in ihrer Position verstellt werden, insbesondere in der Längsrichtung und der Höhen- oder Neigungsrichtung verschoben werden. In der geschlossenen Stellung des Fixiersystems 12 ist die Lenksäule 1 in ihrer Position fixiert.

Das Mantelrohr 5 weist an einer parallel zum Spannbolzen 13 verlaufenden und zum Spannbolzen 13 zeigenden äußeren Umfangsfläche 17 einen sich in Längsrichtung erstreckenden Steg 18 auf. Der Steg 18 ist dabei so angeordnet, dass er den Verstellmechanismus der Lenksäule in der normalen Betriebsstellung nicht blockiert. Weiterhin ist der Steg so dimensioniert, dass im Crashfall der Steg 18 auf den Spannbolzen 13 schlägt und der Steg 18 als Energieabsorptionselement fungiert.

Das Mantelrohr 5 kann aus einem Kunststoff, insbesondere aus einem Faserverbundwerkstoff gebildet sein. Faserverbundwerkstoffe sind Materialien aus Verstärkungsfasern, die in eine Matrix eingebunden sind, wodurch der Werkstoff extrem leicht ausgebildet ist. Zudem haben Faserverbundwerkstoffe im Allgemeinen eine höhere spezifische Steifigkeit und/oder höhere spezifische Festigkeit als metallische Werkstoffe.

Dabei ist es vorteilhaft, dass Mantelrohr 5 mit dem Steg 18 mittels Pultrusion einstückig herzustellen, wodurch der Montageaufwand erheblich reduziert wird oder gar entfällt.

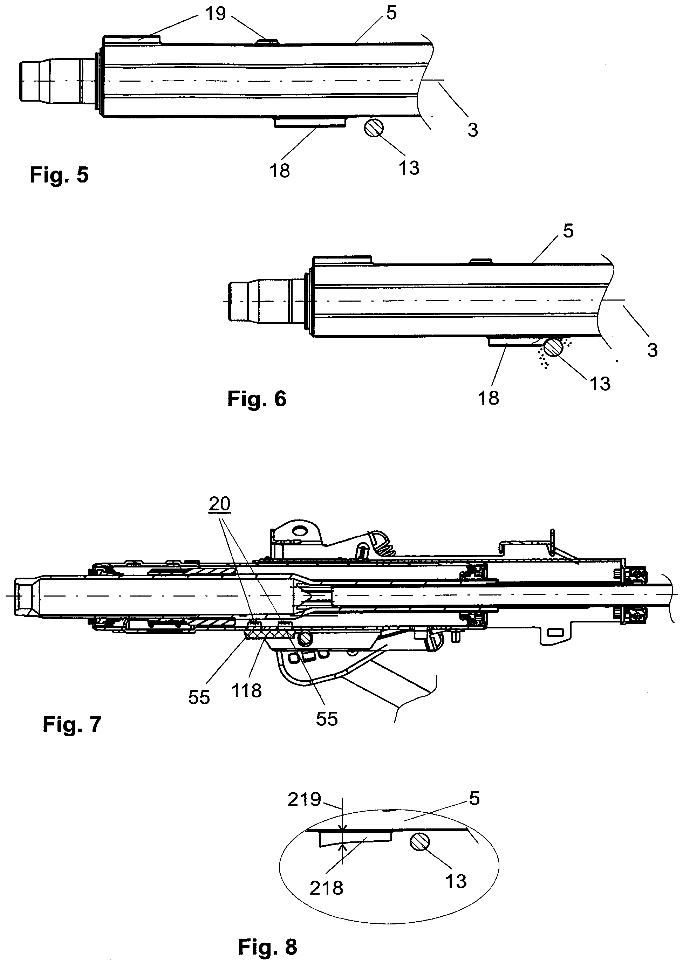

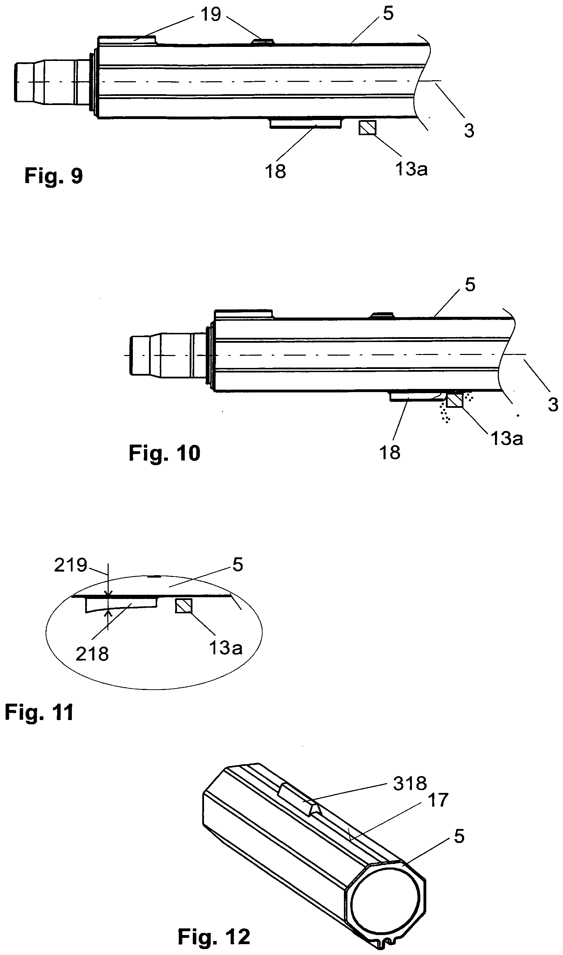

Dazu wird zuerst, wie in Figur 2 veranschaulicht, ein Mantelrohr 5, in dem der Steg 18 integriert vorhanden ist, hergestellt. Durch anschließende mechanische Bearbeitung wird das Mantelrohr 5 auf Endmaß zugeschnitten und der Steg 18 in die endgültige Form, wie in Figur 3 und Figur 4 gezeigt, gebracht. In Figur 12 ist eine alternative Ausführungsform des Steges 380 dargestellt. Hier weist der Steg im Querschnitt gesehen eine trapezförmige Form auf, wodurch die Anbindung am Mantelrohr 5 verbessert werden kann. Die Geometrie des Stegs 18 hängt dabei von der einzustellenden Kennlinie des Energieabsorptionssystems ab. Je nach einzustellender Energieabsorption können auch mehrere Stege in Bewegungsrichtung, beispielsweise nebeneinander oder an verschiedenen Flächen, angeordnet werden. Je nach Energieabsorptionsniveau werden für den Steg Kohlenstoff-, Glas-, Aramid-, Basalt- oder auch Naturfasern verwendet. Dabei ist es bevorzugt vorgesehen, dass die Ausrichtung der Fasern im Steg 18 in Längsrichtung 3 des Mantelrohrs 5 erfolgt. Die jeweilige Absorptionskraft, die es im Crashfall zu absorbieren gilt, wird durch die Form und die Größe des Stegs 18, sowie durch die Anzahl der Stege, eingestellt. In Figur 8 ist dies veranschaulicht. Der Steg 218 ist hier in seiner Höhe 219 mit einem definiertem Verlauf ausgebildet. Entsprechend kann der Steg auch in seiner Breite mit einem definiertem Verlauf ausgebildet sein. Das Mantelrohr 5 weist weiterhin auf der gegenüberliegenden Seite des Stegs 18 Anschlagelemente 19 auf, die die Lenksäule 1 in ihrem Verfahrweg bei der Verstellung begrenzen.

In den Figuren 5 und 6, sowie in den Figuren 9 und 10 ist die Zerstörung des Energieabsorptionselements 18 durch die Einwirkung des Spannbolzens 13 gezeigt. Wenn im Crashfall auf das lenkradseitige Ende der Lenkspindel eine zur Fahrzeugfront gerichtete Kraft einwirkt, verschiebt sich das Mantelrohr 5 in Längsrichtung 3 zur Fahrzeugfront und der Steg 18 des Mantelrohrs 5 schlägt auf den Spannbolzen 13, wobei entsprechend Energie absorbiert wird. Die Energieabsorption erfolgt dabei durch Zerstörung des Stegs 18, wobei die Fasern des Faserverbundwerkstoffs während der Bewegung über die jeweilige gesamte Querschnittsfläche des Stegs brechen und somit der Faserverbund zerbröselt.

Dabei kann es vorteilhaft sein, ein karosseriefestes auf dem Spannbolzen angeordnetes Aufprallelement vorzusehen, welches eine zum Beispiel rechteckige Aufprallfläche für die zum Spannbolzen zeigende Stirnfläche des Stegs im Crashfall bietet. Durch den Aufprall des Stegs 18 auf das Aufprallelement wird der Steg 18 somit gezielt und kontrolliert zerstört.

Wie den Figuren 5 und 6 und 13 entnommen werden kann, ist es denkbar und möglich, den Spannbolzen 13 mit einem kreisförmigen Querschnitt darzustellen. Es ist aber auch denkbar und möglich, den Spannbolzen 13a mit einem nichtkreisförmigen Querschnitt, insbesondere mit einem rechteckigen Querschnitt auszubilden.

Mit Vorteil ist das Aufprallelement, in den Beispielen der Spannbolzen 13 oder 13a derart ausgebildet, dass beim Aufprall auf das Energieabsorptionselement eine hohe Flächenpressung, aber keine Zerspanung, erfolgt. Dadurch kann der Prozess des Herausbrechens von Partikeln aus dem Energieabsorptionselement gefördert werden. Je feiner die Partikel sind, desto gleichmäßiger ist die Energieabsorption.

In Figur 7 ist ein weiteres Ausführungsbeispiel dargestellt. Dabei ist die Lenksäule aus einer Metallkonstruktion hergestellt, wobei das Mantelrohr 55 ein separat ausgebildetes Energieabsorptionselement 118 aus Kunststoff bzw. Faserverbundwerkstoff aufweist. Das Energieabsorptionselement 118 ist über eine Zapfenverbindung 20 in Aussparungen im Mantelrohr 55 eingefügt.

Wie die Figuren 8 und 11 veranschaulichen, kann das Energieabsorptionselement in seiner Längsrichtung eine veränderliches Höhen-Profil aufweisen. Das Profil kann auch in der Breite veränderlich ausgebildet sein.

Durch Einsatz eines Energieabsorptionselements aus Faserverbundwerkstoff kann gegenüber Metallkonstruktionen bei gleichem Volumen mehr Energie absorbiert werden. Aufgrund der niedrigeren Dichte, trägt der Faserverbundwerkstoff zur Gewichtseinsparung bei. Weiterhin kann aufgrund der hohen spezifischen Energieaufnahme von zum Beispiel kohlenstofffaserverstärktem Kunststoff gegenüber Stahl und der gezielten Zerstörung des Stegs eine sehr konstante Energieabsorptionskurve eingestellt werden.

## Patentansprüche

1. Lenksäule für ein Kraftfahrzeug mit einer Lenkspindel (2), die um ihre Drehachse (3) drehbar in einem Mantelrohr (5) gelagert ist, wobei das Mantelrohr (5) in einer Führungsklammer (6) entlang der Längsachse (3) der Lenkspindel (2) verschiebbar geführt ist, wobei das Mantelrohr (5) bei einer axialen Stoßeinwirkung unter Energieaufnahme verschiebbar ist und dabei mit zumindest einem Energieabsorptionselement (18, 118) zusammen wirkt, das ein Steg (18) ist, welcher bei einer durch die axiale Stoßeinwirkung hervorgerufenen Bewegung des Mantelrohrs (5) durch das Zusammenwirken mit einem Aufprallelement (84) zumindest teilweise zerstört wird, **dadurch gekennzeichnet, dass** der Steg (18) aus einem Kunststoff und/oder Faserverbundwerkstoff hergestellt ist.

2. Lenksäule nach Anspruch 1, **dadurch gekennzeichnet, dass** ein Fixiermechanismus (12) vorgesehen ist, der einen Spannapparat mit einem Spannbolzen (13) aufweist.

3. Lenksäule nach Anspruch 1 oder 2, **dadurch gekennzeichnet, dass** der Steg (18, 118) auf dem Mantelrohr (5) ausgebildet ist und das Aufprallelement ein karosseriefestes Aufprallelement ist.

4. Lenksäule nach Anspruch 3, **dadurch gekennzeichnet, dass** der Spannbolzen (13) als karosseriefestes Aufprallelement dient.

5. Lenksäule nach einem oder mehreren der Ansprüche 3 bis 4, **dadurch gekennzeichnet, dass** der Steg (18) an einer äußeren Umfangsfläche des Mantelrohrs (5) einstückig angeformt ist.

6. Lenksäule nach Anspruch 5, **dadurch gekennzeichnet, dass** das Mantelrohr (5) mit Steg (18) mittels Pultrusion hergestellt ist.

7. Lenksäule nach einem der Ansprüche 3 bis 5, **dadurch gekennzeichnet, dass** der Steg (18) als separates Bauteil ausgebildet ist und mit dem Mantelrohr (5) fest verbunden ist.

8. Lenksäule nach einem der vorhergehenden Ansprüche, **dadurch gekennzeichnet, dass** die Fasern des Faserverbundwerkstoffs im Steg (18, 118) in Längsrichtung (3) des Mantelrohrs (5) ausgerichtet sind.

9. Lenksäule nach einem der vorhergehenden Ansprüche, **dadurch gekennzeichnet, dass** in Abhängigkeit von dem gewünschten Energieabsorptionsniveau des Energieabsorptionselements (18, 118) Kohlenstoff-, Glas-, Aramid-, Basalt- oder auch Naturfasern im Faserverbundwerkstoff verwendet sind.

## Claims

1. Steering column for a motor vehicle, with a steering spindle (2) which is mounted rotatably about its axis of rotation (3) in a casing tube (5), wherein the casing tube (5) is guided in a guide clamp (6) so as to be displaceable along the longitudinal axis (3) of the steering spindle (2), wherein, in the event of an axial shock action, the casing tube (5) is displaceable, with energy being absorbed, and interacts in this case with at least one energy absorption element (18, 118) which is a web (18) which is at least partially destroyed by the interaction with an impact element (84) during a movement of the casing tube (5) caused by the axial shock action, **characterized in that** the web (18) is produced from a plastic and/or fibre composite.

2. Steering column according to Claim 1, **characterized in that** a fixing mechanism (12) comprising a clamping apparatus with a clamping bolt (13) is provided.

3. Steering column according to Claim 1 or 2, **characterized in that** the web (18, 118) is formed on the casing tube (5) and the impact element is a body-mounted impact element.

4. Steering column according to Claim 3, **characterized in that** the clamping bolt (13) serves as a body-mounted impact element.

5. Steering column according to one or more of Claims 3 and 4, **characterized in that** the web (18) is moulded integrally on an outer circumferential surface of the casing tube (5).

6. Steering column according to Claim 5, **characterized in that** the casing tube (5) together with the web (18) is produced by means of pultrusion.

7. Steering column according to one of Claims 3 to 5, **characterized in that** the web (18) is designed as a separate component and is fixedly connected to the casing tube (5).

8. Steering column according to one of the preceding claims, **characterized in that** the fibres of the fibre composite in the web (18, 118) are oriented in the longitudinal direction (3) of the casing tube (5).

9. Steering column according to one of the preceding claims, **characterized in that** carbon fibres, glass fibres, aramid fibres, basalt fibres or else natural fibres are used in the fibre composite depending on the desired energy absorption level of the energy absorption element (18, 118).

## Revendications

1. Colonne de direction pour un véhicule automobile avec un arbre de direction (2) disposé dans un tube fourreau (5) de façon à pouvoir tourner autour de son axe de rotation (3), le tube fourreau (5) étant guidé de façon à pouvoir être déplacé dans un crochet de guidage (6) le long de l'axe longitudinal (3) de l'arbre de direction (2), le tube fourreau (5) pouvant être déplacé avec absorption d'énergie en cas d'action de collision axiale et agissant en l'occurrence conjointement avec au moins un élément d'absorption d'énergie (18, 118) prenant la forme d'un étai (18) au moins en partie détruit par l'interaction avec un élément de choc (84) en cas de mouvement provoqué par une action de collision axiale du tube fourreau (5), **caractérisée en ce que** l'étai (18) est fabriqué en matière plastique et/ou à partir d'une matière composite renforcée par des fibres.

2. Colonne de direction selon la revendication 1, **caractérisée en ce qu'**un mécanisme de fixation (12) est prévu, ce mécanisme comportant un appareil de serrage avec un boulon de serrage (13).

3. Colonne de direction selon la revendication 1 ou 2, **caractérisée en ce que** l'étai (18, 118) est réalisé sur le tube fourreau (5) et l'élément de choc est un élément de choc fixé à la carrosserie.

4. Colonne de direction selon la revendication 3, **caractérisée en ce que** le boulon de serrage (13) sert d'élément de choc fixé à la carrosserie.

5. Colonne de direction selon l'une quelconque des revendications 3 à 4 ou plusieurs d'entre elles, **caractérisée en ce que** l'étai (18) est formé d'un seul tenant au niveau d'une surface périphérique extérieure du tube fourreau (5).

6. Colonne de direction selon la revendication 5, **caractérisée en ce que** le tube fourreau (5) est fabriqué avec l'étai (18) par pultrusion.

7. Colonne de direction selon l'une quelconque des revendications 3 à 5, **caractérisée en ce que** l'étai (18) est réalisé sous la forme d'un composant séparé et relié fixement au tube fourreau (5).

8. Colonne de direction selon l'une quelconque des revendications précédentes, **caractérisée en ce que** les fibres de la matière composite renforcée par fibres sont orientées dans l'étai (18, 118) dans la direction longitudinale (3) du tube fourreau (5).

9. Colonne de direction selon l'une quelconque des revendications précédentes, **caractérisée en ce que** des fibres de carbone, de verre, d'aramide, de basalte ou bien naturelles sont utilisées dans la matière composite renforcée par fibres en fonction du niveau d'absorption d'énergie souhaité de l'élément d'absorption d'énergie (18, 118).
